**Europäisches Patentamt**

**European Patent Office**

**Office européen des brevets**

(19)

(11) Veröffentlichungsnummer: **0 211 375 B1**

## EUROPÄISCHE PATENTSCHRIFT

(12)

(45) Veröffentlichungstag der Patentschrift: **25.09.91**

(51) Int. Cl.⁵: **H02K 44/06**, G21C 15/24

(21) Anmeldenummer: **86110397.6**

(22) Anmeldetag: **28.07.86**

(54) **Elektromagnetische Schraubenkanalpumpe für Flüssigmetalle mit innenliegenden Mehrphasenspulen.**

(30) Priorität: **08.08.85 DE 3528573**

(43) Veröffentlichungstag der Anmeldung:
**25.02.87 Patentblatt 87/09**

(45) Bekanntmachung des Hinweises auf die Patenterteilung:
**25.09.91 Patentblatt 91/39**

(84) Benannte Vertragsstaaten:
**AT BE CH DE FR GB IT LI LU NL SE**

(56) Entgegenhaltungen:
**FR-A- 1 344 696        FR-A- 1 593 007
FR-A- 2 182 078        GB-A- 608 197
US-A- 3 052 097        US-A- 3 251 302**

(73) Patentinhaber: **INTERATOM Gesellschaft mit beschränkter Haftung
Friedrich-Ebert-Strasse
W-5060 Bergisch-Gladbach 1(DE)**

(72) Erfinder: **Lauhoff, Theodor, Dipl.-Ing.
Enrico-Fermi-Strasse 2
W-5060 Bergisch Gladbach 1(DE)**
Erfinder: **Barzantny, Joachim
Im Wiesengrund 42
W-5067 Kürten-Eichhof(DE)**

(74) Vertreter: **Fuchs, Franz-Josef, Dr.-Ing. et al
Postfach 22 13 17
W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine elektromagnetische Schraubenkanalpumpe nach dem Oberbegriff des Anspruchs 1. Schraubenkanalpumpen sind in einer Vielzahl von Ausführungsformen bekannt und werden zur Förderung von Flüssigmetallen mit Temperaturen von einigen hundert Grad Celsius eingesetzt. Sie sind insbesondere geeignet, einen hohen Förderdruck zu erzeugen.

Aus "NASA CONTRACTOR REPORT", NASA CR-1571, Juni 1970, Washington D. C. (US), J. W. Gahan u. a.: "Primary loop electromagnetic pump design" sind verschiedene Ausführungsformen solcher Pumpen zu entnehmen. Auch aus der FR-A-1 344 696 und der GB-A-608 197 ist der prinzipielle Aufbau von Schraubenkanalpumpen bekannt.

Die bekannten Pumpentypen benötigen wegen ihrer außerhalb des Schraubenkanals liegenden Magnetspulen ein verhältismäßig großen Bauvolumen und können nur in begrenztem Umfang als Tauchpumen in relativ kleinen Schmelzenbehältern eingesetzt werden. Auch benötigten die außenliegenden Spulen sehr große Magnetkerne aus Magnetblechen, wodurch das Gewicht solcher Pumpen relativ hoch wurde. (bitte auf Seite 1 hinter Zeile 30 einfügen) Aus der FR-A-2 182 078 sind zwar im Inneren eines Ringkanals einer elektromagnetischen Pumpe angeordnete Spulen bekannt, jedoch ist der Ringkanal in diesem Falle kein Schraubenkanal, und die Spulen erzeugen in axialer Richtung wandernde Magnetfelder. Ein hoher Förderdruck läßt sich mit einer solchen Pumpe nicht erreichen.

Auch aus der US-A-3,251,302 ist eine Ringkanalpumpe mit innen liegenden Spulen bekannt, wobei diese Spulen ebenfalls eine axiale Förderung von elektrisch leitfähigen Füssigkeiten im Ringkanal bewirken sollen. Trotz des relativ komplizierten geometrischen Aufbaus einer solchen Pumpe ist die Erzielung eines hohen Förderdruckes nicht möglich.

Aufgabe der vorliegenden Erfindung ist eine möglichst kompakte elektromagnetische Schraubenkanalpumpe, welche insbesondere einen möglichst geringen Außendurchmesser bei möglichst großem Produkt aus Fördermenge und Förderdruck aufweist. Gleichzeitig soll die Herstellung und Handhabung der Pumpe möglichst einfach und kostengünstig sein.

Zur Lösung dieser Aufgabe wird gemäß dem Anspruch 1 vorgeschlagen, daß die Mehrphasenspulen im zylindrischen Innenteil und der magnetische Rückschluß außerhalb des schraubenförmigen Förderkanals angeordnet sind, wobei die Mehrphasenspulen aus drei oder sechs Spulen bestehen, welche symmetrisch, sternförmig übereinander gewickelt sind, wobei die Mittelebenen der Spulen sich jeweils in der Mittellinie des zylindrischen Innenteils unter gleichen Winkeln schneiden. Da der magnetische Rückschluß nur eine geringe Dicke haben muß, kann der Durchmesser des Schraubenkanals näherungsweise so groß gemacht werden, wie der Außendurchmesser der gesamten Pumpe, was sich sehr günstig auf den Wirkungsgrad und die übrigen Eigenschaften der Pumpe auswirkt. Wichtig ist auch die anhand der Zeichnung näher beschriebene sternförmige Anordnung der Spulen, um einen kompakten Aufbau zu erreichen.

Wie in Anspruch 2 vorgeschlagen wird, kann das Außengehäuse der Pumpe gleichzeitig zumindest teilweise den magnetischen Rückschluß bilden, sofern ein magnetisch leitendes Material zur Verfügung steht, welches gleichzeitig gegen das zu fördernde Flüssigmetall resistent ist. Diese Ausführungsform führt zu einem besonders einfachen und wirtschaftlichen Aufbau der Pumpe.

Sollte eine Verstärkung des magnetischen Rückschlusses nötig sein, so kann diese gemäß dem Anspruch 3 durch einen Wickel aus magnetisch gut leitendem Material innerhalb des Außengehäuses und außerhalb des Schraubenkanals erreicht werden.

In spezieller Ausgestaltung der Erfindung wird im Anspruch 4 vorgeschlagen, daß die Pumpe als Tauchpumpe für Temperaturen von 400 - 600 °C ausgelegt ist. Dies bedeutet, daß die Pumpe außer einem geeigneten Außenmantel entsprechend temperaturfeste Spulen und Magnetbleche mit genügend hohem Curie-Punkt aufweisen muß.

Im Anspruch 5 wird weiterhin vorgeschlagen, daß die Pumpe an der eingetauchten Seite einen ringförmigen Einlaßquerschnitt konzentrisch zum zylindrischen Innenteil aufweist, der in den Schraubenkanal mündet. Diese sehr einfache Ausführungsform ist für Tauchpumpen geeignet und erübrigt eine komplizierte Strömungsführung am Einlaß der Pumpe.

In Anspruch 6 wird ferner vorgeschlagen, daß der Schraubenkanal an der Oberseite in einen Ringkanal mündet, welcher einen seitlichen Auslaß aufweist. Diese Ausführungsform entspricht im allgemeinen den Anforderungen beim Einsatz solcher Pumpen und ermöglicht zusätzlich einen Zugang von oben zu den Spulen, bzw. das Auswechseln der Spulen.

In spezieller Ausgestaltung der Erfindung wird im Anspruch 7 vorgeschlagen, daß die elektrischen Zuleitungen der Mehrphasenspulen von oben in den zylindrischen Innenteil eingeführt sind. Im allgemeinen wird die Pumpe ohnehin ein Halterohr zur Aufhängung aufweisen, in dessen Inneren die Zuleitungen dann verlegt sein können. Dieser Aufbau stellt in jedem Fall sicher, daß die elektrischen Leitungen nicht mit dem Flüssigmetall in Berührung kommen können.

In den Ansprüchen 8 und 9 sind vorteilhafte Ausgestaltungen der Mehrphasenspulen im Inneren der Pumpe angegeben, welche anhand der Zeichnung noch näher erläutert werden. Eine möglichst optimale Ausnutzung des zylindrischen Innenteiles durch Spulen bzw. einen geeignet geformten Magnetkern ermöglicht einen hohen Wirkungsgrad der Pumpe.

Schließlich wird im Anspruch 10 eine Maßnahme vorgeschlagen, wie sie für manche Flüssigmetalle, insbesondere Blei, vorteilhaft sein kann. Da der Wirkungsgrad der Pumpe auch von dem Übergangswiderstand zwischen dem geförderten Flüssigmetall und den Stegen des schraubenkanals abhängt, ist es wichtig, daß diese Stege möglichst gut von dem Metall benetzt werden, um kleine Übergangswiderstände zu erreichen. Dies kann durch entsprechende Materialauswahl oder durch eine geeignete Innenbeschichtung der Stege erreicht werden.

Eine besonders wichtige Ausgestaltung für Schraubenkanalpumpen wird im Anspruch 11 vorgeschlagen. Diese Ausgestaltung ist in Verbindung mit den bisher beschriebenen Merkmalen oder aber auch für anders aufgebaute Schraubenkanalpumpen von Bedeutung. Für den Wirkungsgrad einer Schraubenkanalpumpe ist es, wie sich herausgestellt hat, entscheidend, daß ein möglichst großer Strom durch das Flüssigmetall und die Stege des Schraubenkanals, und zwar etwa senkrecht zur Strömungsrichtung, fließt. Ströme, die durch die Wände des Schraubenkanals fließen, verringern den Wirkungsgrad, da diese Ströme nicht zum Antrieb des Flüssigmetalls beitragen. Es ist daher besonders vorteilhaft, die Stege aus möglichst gut elektrisch leitendem Material und die Wände aus einem möglichst schlecht elektrisch leitendem Material herzustellen, um den bestmöglichen Wirkungsgrad zu erreichen. Natürlich muß die fügetechnische Verbindbarkeit der beiden Materialien gewährleistet sein, und auch die Benetzbarkeit des Stegmaterials durch das zu fördernde Flüssigmetall spielt, wie oben erläutert, eine Rolle. Unter Berücksichtigung dieser Faktoren lassen sich jedoch für die meisten zu fördernden Flüssigmetalle geeignete Materialkombinationen finden.

In Fällen, wo keine verschiedenen Materialien für Stege und Wände zur Verfügung stehen, oder zur weiteren Verbesserung des wirkungsgrades wird gemäß Anspruch 12 vorgeschlagen, daß die Stege des Schraubenkanals möglichst hoch und die Wände möglichst dünn sein sollen. In diesem Falle ist der für den nutzbaren Strom zur Verfügung stehende Querschnitt sehr viel größer als der für die unerwünschten Wandströme, was sich ebenfalls günstig auf den Wirkungsgrad auswirkt, sofern die Spaltbreite des Magnetkreises nicht zu groß wird.

Ein Ausführungsbeispiel der Erfindung ist in der Zeichnung dargestellt und zwar zeigen

Figur 1     einen Längsschnitt durch eine erfindungsgemäße Pumpe,

Figur 2     einen Querschnitt entlang der Linie II-II und

Figur 3     zur Veranschaulichung die Form eines Magnetbleches des Magnetkerns.

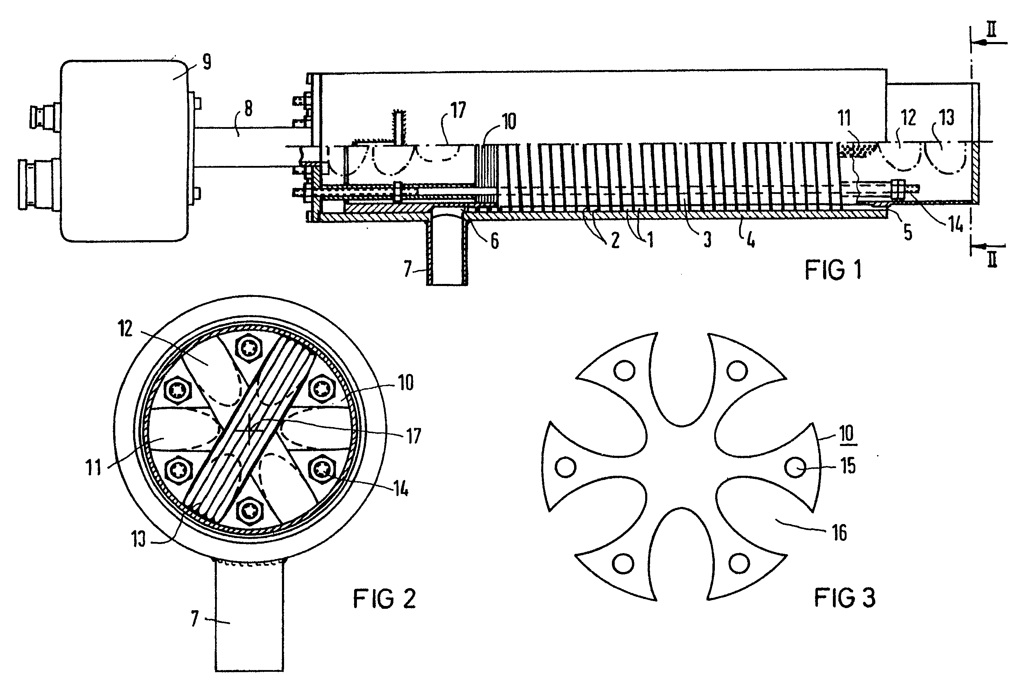

Figur 1 zeigt den Längsschnitt einer erfindungsgemäß ausgeführten Schraubenkanalpumpe. Der Schraubenkanal 1 ist in an sich bekannter Weise ausgeführt, d. h. die einzelnen Windungen des Schraubenkanals 1 werden durch Stege 2 voneinander getrennt, wobei die Stege 2 entweder an einem zylindrischen Innenteil 3 oder an einem zylindrischen Außengehäuse 4 befestigt sind. Der Schraubenkanal 1 kann auch aus einer mehrgängigen Schraube bestehen, und seine Steigung sowie die Windungszahl beeinflußt den Förderdruck und die Fördermenge. Generell gilt: je größer die Anzahl der Windungen, desto höher der Förderdruck und desto kleiner die Fördermenge.

Anders als bei bisherigen Ausführungsformen weist die vorliegende Pumpe Magnetspulen 11, 12, 13 im Inneren des zylindrischen Innenteils 3 auf. Diese Spulen 11, 12, 13 sind so angeordnet, daß sie ein in Umfangsrichtung des Förderkanals 1 wanderndes radiales Magnetfeld erzeugen können. Bei dem vorliegenden Ausführungsbeispiel sind drei Spulen 11, 12, 13 symmetrisch, sternförmig übereinander gewickelt, wobei die Mittelebenen der Spulen 11, 12, 13 sich jeweils in der Mittellinie 17 des zylindrischen Innenteils 3 unter gleichen Winkeln schneiden. Dabei sind die Spulen 11, 12, 13 auf einen aus Magnetblechen geschichteten Kern 10 gewickelt, welcher den nicht von den Spulen 11, 12, 13 benötigten Raum weitestgehend ausfüllt. Die Figur 3 zeigt die Form eines Magnetbleches aus denen der Kern 10 geschichtet wird. Ein aus solchen Blechen geschichteter Kern wird durch die Schrauben 14 zusammengehalten und kann nacheinander mit den Spulen 11, 12, 13 gewickelt werden. Dabei ist die Spule 11, welche zuerst gewickelt wird an beiden Enden des Kerns 10 kürzer als die nächstgewickelte Spule 12 und diese wiederum als die dann folgende Spule 13. Andere Formen, die Spulen übereinander zu wickeln sind natürlich möglich, jedoch im allgemeinen nicht so einfach zu bewerkstelligen. Grundsätzlich ist auch die Verwendung von sechs Spulen mit einem entsprechenden Wicklungsschema möglich, jedoch im allgemeinen nicht nötig. Die Spulen können z. B. mit einem einfachen Dreiphasen-Wechselstrom angesteuert werden. Bei Verwendung der Pumpe als Tauchpumpe, wie im vorliegenden Fall, sollte der zylindrische Innenteil 3 am unteren Ende flüssigmetalldicht verschweißt sein, damit die Spulen geschützt sind. Die Ausbildung des oberen Endes der Pumpe hängt von den Gegebenheiten im einzelnen ab. Im allgemeinen ist es sinnvoll , daß die Oberseite zwecks Entnahme der Spulen oder zu anderen Wartungsarbeiten geöffnet werden kann. Ferner muß eine geeignete Aufhängung 8 für eine Handhabung der Pumpe vorgesehen werden, diese Aufhängung 8 kann beispielsweise aus einem Rohr bestehen, in welchem die elektrischen Zuleitungen der Pumpen verlegt sind. Ein entsprechender Anschlußkasten 9 kann ebenfalls an der Halterung angebracht sein. Wegen der innenliegenden Spulen 11, 12, 13 ist es sinnvoll, den Auslaß 7 der Pumpe zur Seite zu führen. Daher geht der Schraubenkanal 1 im oberen Bereich in einen Ringkanal 6 über, welcher einen seitlichen Auslas 7 aufweist. Da der Bereich oben und unten in der Pumpe, in welche die Spulen 11, 12, 13 unterschiedliche Längen aufweisen, für eine Förderung nicht genutzt werden kann, steht genügend Platz für die Ausbildung eines geeigneten Einlasses 5 und Auslasses 6,7 zur Verfügung.

Die genaue Form der Spulen 11, 12, 13 und die Querschnitte der Wicklungen hängen von den räumlichen Gegebenheiten ab. Als besonders günstig hat sich für die Wicklungen ein Querschnitt von der Form eines an einer Seite abgeschnittenen Ovals 16 erwiesen. Bei dieser Form erhalten die den Kern 10 bildenden Magnetbleche eine für den magnetischen Fluß günstige Form und ausreichende mechanische Stabilität, trotz der notwendigen Bohrungen 15 zur Aufnahme der Befestigungsschrauben 14.

Die Verwendung von innenliegenden Spulen (11, 12, 13) mit einem außenliegenden magnetischen Rückschluß (4) hat außerdem einen weiteren Vorteil. Ferritische Materialien dehnen sich bei Temperaturerhöhung weniger als z. B. austenitische. Sind daher der zylindrische Innenteil 3 und evtl. die Stege 2 aus austenitischem Material, so entsteht bei Aufheizung der Pumpe kein Spalt zwischen Außenmantel 4 und Stegen 2, der zu Wirkungsgradverlusten führen würde.

Die erfindungsgemäße Pumpe eignet sich unter anderem besonders gut zur Förderung von Blei oder anderen Flüssigmetallen mit hohem spezifischem Gewicht und für Drücke von z. B. etwa 1 - 10 bar, so daß statt des bisherigen Schwerkraftgießens auch beim Bleigießen geschlossene Druckgußsysteme eingesetzt werden können, welche das Risiko einer Freisetzung von Blei in die Umwelt vermindern.

**Patentansprüche**

1. Elektromagnetische Schraubenkanalpumpe, mit einem schraubenförmigen Förderkanal (1), Mehrphasenspulen (11, 12, 13) zur Erzeugung eines in Umfangsrichtung des Förderkanals (1) wandernden Magnetfeldes und einem magnetischen Rückschluß (4), **dadurch gekennzeichnet,** daß die Mehrphasenspulen (11, 12, 13) im zylindrischen Innenteil (3) und der magnetische Rückschluß (4) außerhalb des schraubenförmigen Förderkanals (1) angeordnet sind, wobei die Mehrphasenspulen (11, 12, 13) aus drei oder sechs Spulen bestehen, welche symmetrisch, sternförmig übereinander gewickelt sind, wobei die Mittelebenen der Spulen sich jeweils in der Mittellinie (17) des zylindrischen Innenteils (3) unter gleichen Winkeln schneiden.

2. Schraubenkanalpumpe nach Anspruch 1, **dadurch gekennzeichnet,** daß das Außengehäuse (4) der Pumpe gleichzeitig zumindest teilweise den magnetischen Rückschluß (4) bildet.

3. Schraubenkanalpumpe nach Anspruch 1 oder 2, **dadurch gekennzeichnet,** daß der magnetische Rückschluß teilweise durch das Außengehäuse (4) und teilweise durch einen innerhalb des Außengehäuses (4) angeordneten Wickel aus magnetisch gut leitendem Material besteht.

4. Schraubenkanalpumpe nach Anspruch 1, 2 oder 3, **dadurch gekennzeichnet,** daß die Pumpe als Tauchpumpe für Temperaturen von 400 - 600 °C ausgelegt ist.

5. Schraubenkanalpumpe nach Anspruch 4, **dadurch gekennzeichnet,** daß die Pumpe an der eingetauchten Seite einen ringförmigen Einlaßquerschnitt (5) konzentrisch zum zylindrischen Innenteil aufweist, der in den Schraubenkanal (1) mündet.

6. Schraubenkanalpumpe nach einem der vorhergehenden Ansprüche, **dadurch gekennzeichnet,** daß der Schraubenkanal (1) an der Oberseite in einen Ringkanal (6) mündet, welcher einen seitlichen Auslaß (7) aufweist.

7. Schraubenkanalpumpe nach einem der vorhergehenden Ansprüche, **dadurch gekennzeichnet,** daß die elektrischen Zuleitungen der Mehrphasenspulen (11, 12, 13) von oben in den zylindrischen Innenteil (3) eingeführt sind.

8. Schraubenkanalpumpe nach einem der vorhergehenden Ansprüche,

**dadurch gekennzeichnet,**

daß die Mehrphasenspulen (11, 12, 13) auf einen aus Magnetblechen geschichteten Kern (10) gewickelt sind, welcher den nicht von den Spulen (11, 12, 13) benötigten Raum weitestgehend ausfüllt.

9. Schraubenkanalpumpe nach einem der vorhergehenden Ansprüche,

**dadurch gekennzeichnet,**

daß die Spulenwicklungen etwa den Querschnitt eines an einer Seite abgeschnittenen Ovals (16) aufweisen.

10. Schraubenkanalpumpe, insbesondere nach einem der vorhergehenden Ansprüche,

**dadurch gekennzeichnet,**

daß die Stege (2) mit einer Beschichtung versehen sind, die eine Benetzung durch das zu fördernde Metall ermöglicht.

11. Schraubenkanalpumpe, insbesondere nach einem der vorhergehenden Ansprüche,

**dadurch gekennzeichnet,**

daß die Stege (2) des Schraubenkanals (1) aus einem möglichst gut elektrisch leitenden Material und die aus Innenteil (3) und Außengehäuse (4) gebildeten Wände aus einem möglichst schlecht elektrisch leitenden Material bestehen.

12. Schraubenkanalpumpe, insbesondere nach einem der vorhergehenden Ansprüche,

**dadurch gekennzeichnet,**

daß die stege (2) des Schraubenkanals möglichst hoch und die aus Innenteil (3) und Außengehäuse (4) gebildeten Wände möglichst dünn sind.

## Claims

1. Electromagnetic helical channel pump, having a helical conveying channel (1), multiphase coils (11, 12, 13) for the purpose of generating a magnetic field moving in the peripheral direction of the conveying channel (1) and a magnetic return path (4), characterized in that the multiphase coils (11, 12, 13) are arranged in the cylindrical inner portion (3) and the magnetic return path (4) is arranged outside the helical conveying channel (1), with the multiphase coils (11, 12, 13) consisting of three or six coils which are wound one upon the other in a symmetrical, star-shaped manner, the central planes of the coils intersecting, in each case, in the central line (17) of the cylindrical inner portion (3) at the same angles.

2. Helical channel pump according to claim 1, characterized in that the outer housing (4) of the pump simultaneously forms, at least in part, the magnetic return path (4).

3. Helical channel pump according to claim 1 or 2, characterized in that the magnetic return path in part as a result of the outer housing (4) and in part as a result of a winding arranged inside the outer housing (4) consists of magnetically highly conductive material.

4. Helical channel pump according to claim 1, 2 or 3, characterized in that the pump is designed as a submersible pump for temperatures of 400 - 600 °C.

5. Helical channel pump according to claim 4, characterized in that the pump has, on the side which is submerged, an annular inlet cross section (5), which is concentric with the cylindrical inner portion, running into the helical channel (1).

6. Helical channel pump according to one of the preceding claims, characterized in that the helical channel (1) on the upper side runs into an annular channel (6) which has a lateral outlet (7).

7. Helical channel pump according to one of the preceding claims, characterized in that the electrical feed lines of the multiphase coils (11, 12, 13) are introduced from above into the cylindrical inner portion (3).

8. Helical channel pump according to one of the preceding claims, characterized in that the multiphase coils (11, 12, 13) are wound onto a core (10) which is built up in layers of magnetic steel sheets and which, as far as possible, fills up the space which is not required by the coils (11, 12, 13).

9. Helical channel pump according to one of the preceding claims, characterized in that the coil windings have substantially the cross section of an oval (16) which is cut off at one side.

10. Helical channel pump, in particular according to one of the preceding claims, characterized in that the cross-pieces (2) are provided with a coating which renders possible wetting by the metal to be conveyed.

11. Helical channel pump, in particular according to one of the preceding claims, characterized in that the cross-pieces (2) of the helical channel (1) consist of a material which is as highly electrically conductive as possible and the walls, which are formed from inner portion (3) and outer housing (4), consist of a material which is as poorly electrically conductive as possible.

12. Helical channel pump, in particular according to one of the preceding claims, characterized in that the cross-pieces (2) of the helical channel are as high as possible and the walls formed from inner portion (3) and outer housing (4) are as thin as possible.

## Revendications

1. Pompe électromagnétique à conduit hélicoïdal, comportant un conduit hélicoïdal d'entraînement (1), des bobines polyphasées (11,12,13) servant à produire un champ magnétique se propageant dans la direction circonférentielle du conduit d'entraînement (1), et un circuit magnétique de fermeture (4), caractérisée par le fait que les bobines polyphasées (11,12,13) sont disposées dans la partie intérieure cylindrique (3) et que le circuit magnétique de fermeture (4) est situé à l'extérieur du conduit hélicoïdal d'entraînement (1), les bobines polyphasées (11,12,13) étant constituées par trois ou six bobines qui sont enroulées symétriquement, en forme d'étoile les unes sur les autres et dont les plans médians se recoupent respectivement, sous des angles identiques, sur la ligne médiane (17) de la partie intérieure cylindrique (3).

2. Pompe à conduit hélicoïdal suivant la revendication 1, caractérisée par le fait que le carter extérieur (4) de la pompe constitue simultanément au moins en partie le circuit magnétique de fermeture (4).

3. Pompe à conduit hélicoïdal suivant la revendication 1 ou 2, caractérisée par le fait que le circuit magnétique de fermetureest constitué en partie par le carter extérieur (4) et en partie par un enroulement formé d'un matériau formant bon conducteur magnétique et disposé à l'intérieur du carter extérieur (4).

4. Pompe à conduit hélicoïdal suivant la revendication 1, 2 ou 3, caractérisée par le fait que la pompe est agencée sous la forme d'une pompe immergée pour des températures de 400-600° C.

5. Pompe à conduit hélicoïdal suivant la revendication 4, caractérisée par le fait que la pompe comporte, sur le côté immergé, une section transversale annulaire d'admission (5) concentrique à la partie intérieure cylindrique et débouchant dans le conduit hélicoïdal (1).

6. Pompe à conduit hélicoïdal suivant l'une des revendications précédentes, caractérisée par le fait que le conduit hélicoïdal (1) débouche, sur le côté supérieur, dans un canal annulaire (6), qui possède une sortie latérale (7).

7. Pompe à conduit hélicoïdal suivant l'une des revendications précédentes, caractérisée par le fait que les conducteurs d'alimentation électrique des bobines polyphasées (11,12,13) pénètrent par le haut dans la partie intérieure cylindrique (3).

8. Pompe à conduit hélicoïdal suivant l'une des revendications précédentes, caractérisée par le fait que les bobines polyphasées (11,12,13) sont bobinées sur un noyau (10) formé par l'empilage de tôles magnétiques et qui remplit dans une très large mesure l'espace non requis par les bobines (11,12,13).

9. Pompe à conduit hélicoïdal suivant l'une des revendications précédentes, caractérisée par le fait que les enroulements des bobines possèdent approximativement la section transversale d'un ovale (16) interrompu d'un côté.

10. Pompe à conduit hélicoïdal, notamment suivant l'une des revendications précédentes, caractérisé par le fait que les barrettes (2) comportent un revêtement qui permet un mouillage par le métal devant être entraîné.

11. Pompe à conduit hélicoïdal, notamment suivant l'une des revendications précédentes, caractérisée par le fait que les barrettes (2) du conduit hélicoïdal (1) sont réalises en un matériau aussi bon conducteur électrique que possible et que les parois formées par la partie intérieure (3) et le carter extérieur (4) sont réalisées en un matériau aussi mauvais conducteur électrique que possible.

12. Pompe à conduit hélicoïdal, notamment suivant l'une des revendications précédentes, caractérisée par le fait que les barrettes (2) du conduit hélicoïdal sont aussi hautes que possible et que les parois formées par la partie intérieure (3) et le carter extérieur (4) sont aussi minces que possible.

FIG 1

FIG 2

FIG 3

7